(19) Europäisches Patentamt
European Patent Office
Office européen des brevets

(11) **EP 0 955 732 B1**

(12) **EUROPEAN PATENT SPECIFICATION**

(45) Date of publication and mention
of the grant of the patent:
**17.09.2008 Bulletin 2008/38**

(51) Int Cl.:
***H04B 1/16*** *(2006.01)*

(21) Application number: **98107886.8**

(22) Date of filing: **29.04.1998**

(54) **Method and device to demultiplex a frequency demodulated stereo-multiplex-signal**

Verfahren und Vorrichtung zum demultiplexieren eines frequenzdemodulierten Stereomultiplexsignals

Méthode et dispositif de démultiplexage d'un signal-multiplex-stéréo démodulé en fréquence

(84) Designated Contracting States:
**DE FR GB NL**

(43) Date of publication of application:
**10.11.1999 Bulletin 1999/45**

(73) Proprietor: **Sony Deutschland GmbH**
**10785 Berlin (DE)**

(72) Inventor: **Wildhagen, Jens,**
**SONY Deutschland GmbH**
**70736 Fellbach (DE)**

(74) Representative: **Müller, Frithjof E.**
**Müller Hoffmann & Partner**
**Patentanwälte**
**Innere Wiener Strasse 17**
**81667 München (DE)**

(56) References cited:
**EP-A- 0 418 036       US-A- 5 253 299**

• **PATENT ABSTRACTS OF JAPAN vol. 018, no. 593 (E-1629), 11 November 1994 (1994-11-11) & JP 06 224866 A (CLARION CO LTD), 12 August 1994 (1994-08-12)**

**Description**

The present invention is concerned with the demultiplexing of a stereo multiplex signal, especially to provide a method and a device to demultiplex a frequency demodulated stereo multiplex signal with improved signal to noise ratio and channel separation, especially with a low RF-signal amplitude.

For fm-broadcasting, a stereo-multiplex-signal s(t) is frequency modulated:

$$r_{fm}(t) = \cos(\omega_C + \Delta\omega \cdot \int_{-\infty}^{t} s(\tau) \, d\tau),$$

with $\omega_C$ being the carrier frequency and $\Delta\omega$ the frequency shift.

The stereo-multiplex-signal consists of the sum of the left and the right audio component, the amplitude modulated difference signal of the left and the right audio signal with suppressed carrier and the pilot tone. The pilot tone is necessary for the coherent amplitude demodulation of the stereo difference signal. The stereo-multiplex-signal is described by the following equation:

$$s(t) = s_l(t) + s_r(t) + (s_l(t) - s_r(t)) \cdot \sin(2\omega_{pil}t) + c \cdot \sin(\omega_{pil}t),$$

with:

$s_l(t)$:                left audio signal
$s_r(t)$:                right audio signal
$\omega_{pil} = 2\pi \cdot 19\text{kHz}$:    angular frequency of the pilot tone
c:                constant.

For the demodulation of a frequency demodulated stereo multiplex signal two steps are necessary: the fm-demodulation and the demultiplexing of the stereo multiplex signal. This invention is only concerned with the demultiplexing of the stereo multiplex signal.

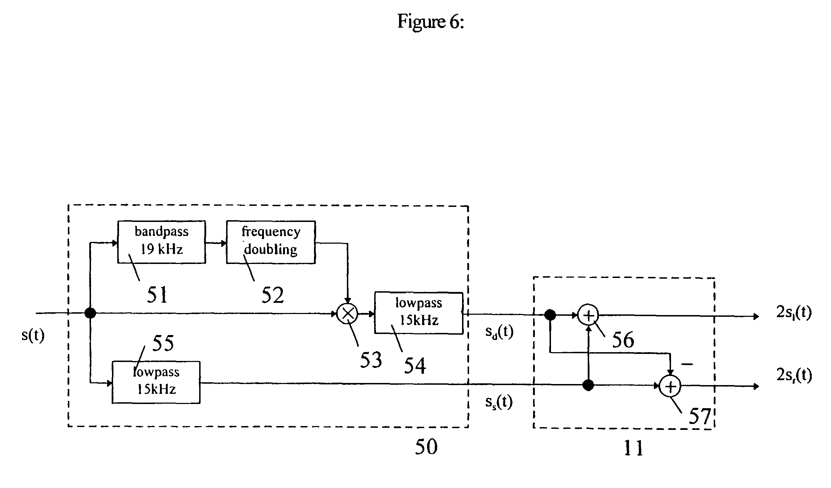

Figure 6 shows a block diagram of a stereo demultiplexer according to the prior art with its basic components, namely a generator 50 for generating the stereo difference signal $s_d(t)=s_l(t)-s_r(t)$ and the stereo sum signal $s_s(t)=s_l(t)+s_r(t)$ and a unit 11 receiving the stereo difference signal $s_d(t)$ and the stereo sum signal $s_s(t)$ to calculate the signals for the left and the right channel $s_l(t)$ and $s_r(t)$. It is well-known how the generator 50 and the unit 11 are working. In the shown example the generator 50 comprises a lowpass filter 55 having a cut off frequency of 15 kHz receiving the stereo multiplex signal s(t) and outputting the stereo sum signal $s_s(t)$, and a mixer 53 mixing the amplitude modulated stereo difference signal $s_d(t)$ to the baseband by multiplying the stereo multiplex signal s(t) with the frequency doubled pilot tone. Therefore the pilot tone is extracted by a bandpass filter 51 with a center frequency of 19 kHz and is frequency doubled with a frequency doubling circuit 52 that can be realized for example as a PLL. The output signal of the mixer 53 is filtered with a lowpass filter 54 having a cut off frequency of 15 kHz to extract the stereo difference signal $s_d(t)$. To generate the the left audio channel $s_l(t)$ the stereo sum signal $s_s(t)$ is added to the stereo difference signal $s_d(t)$ with an adder 56 included in the unit 11 and to generate the right audio channel $s_r(t)$ the stereo difference signal $s_d(t)$ is subtracted from the stereo sum signal $s_s(t)$ with an adder 57 also included in said unit 11. As can be taken from the above description and Figure 6, the stereo demultiplexing is done by a coherent amplitude demodulation of the stereo difference signal $s_d(t)$ and by adding or subtracting the stereo difference signal $s_d(t)$ to the stereo sum signal $s_s(t)$.

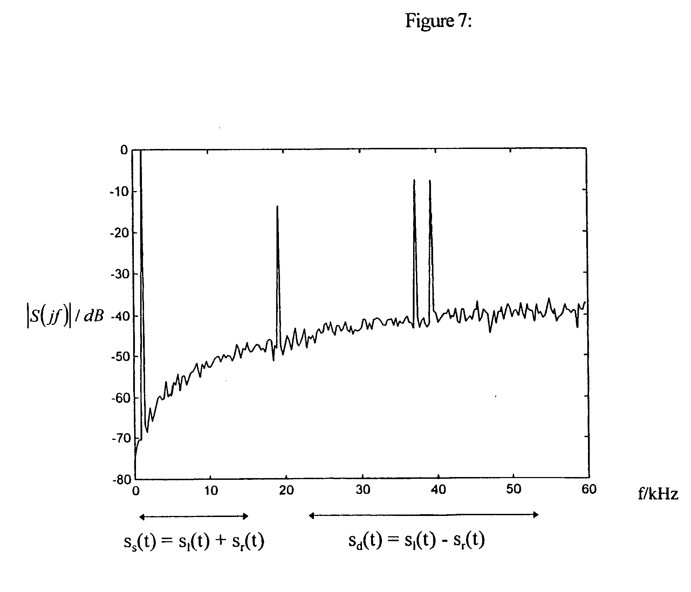

The signal to noise ratio of the frequency demodulated signal s(t) increases proportional to the squared frequency. Figure 7 shows the amplitude spectrum of a frequency demodulated stereo-multiplex-signal with a carrier to noise ratio of 20 dB. In this figure the signal for the left channel $s_l(t)$ equals zero and the signal for the right channel $s_r(t)$ equals $\cos(2\pi \cdot 1\text{kHz} \cdot t)$. As can be seen in this amplitude spectrum, the noise floor within the frequency range of the stereo sum signal $s_s(t)=s_l(t)+s_r(t)$ is much lower than the noise floor within the frequency range of the amplitude modulated stereo difference signal $s_d(t)=s_l(t)-s_r(t)$. In case of mono reception the audio signal $s_l(t)$, $s_r(t)$ consists only of the stereo sum signal $s_s(t)$ with the lower noise floor. In case of stereo reception the audio signal $s_l(t)$, $s_r(t)$ consists of the sum and difference of the stereo sum signal $s_s(t)$ with the lower noise floor and the stereo difference signal $s_d(t)$ with the high noise floor. Therefore the noise floor of the audio signal in case of stereo reception is much higher compared to mono reception. For this reason there are receivers known which switch automatically from stereo mode to mono mode when the RF-signal quality is bad. Generally there exist the following four possibilities for the receivers to decide when such a switching should take place:

1) There exists a threshold depending on the RF-fieldstrength to switch from stereo mode to mono mode. This hard decision has many disadvantages, mainly that the listener can hear these switches.

2) There exists a sliding transition from stereo mode to mono mode dependent on the RF-signal quality, i. e. the RF-fieldstrength.

3) There exists a modified sliding stereo to mono transition dependent on the RF-signal quality and additional modulation dependent factors like the stereo difference signal or the amplitude of the multiplex-signal.

4) There exists a stereo to mono blending by comparing the frequency components of subbands of the stereo sum signal and the stereo difference signal.

The third method is disclosed in the DE 44 00 865 A1 according to which an optimised sliding stereo to mono transition is disclosed which uses the RF-signal quality and at least one additional modulation dependent factor. It is not disclosed how the sliding stereo to mono transition is performed, but it is generally known to perform such a sliding stereo to mono transition by multiplying the stereo difference signal with a factor k(t) with $0 \leq k(t) \leq 1$. In this case a mono signal is output on the left and the right channel when k(t)=0 and a stereo signal with maximum channel separation is output when k(t)=1. The DE 44 00 865 A1 discloses that this factor k(t) is dependent on 1) the information transmitted by the RDS (Radio Data System) signal, i. e. the transmitted program type, e. g. rock, pop, classic, news, the speech music-marker and the clock time, 2) the amplitude of the RF-signal, 3) an analyzation if there is a stereo difference signal present and 4) the output volume or on 5) a combination of one or more of those four modulation dependent factors.

The fourth known possibility to switch from stereo to mono mode is disclosed in the JP 06 224866 according to which the stereo sum signal $E_M$ and the stereo difference signal $E_S$ are respectively split into m subband signals to calculate a corrected stereo difference signal $E_S'$ by comparing the frequency components of each subband. The comparison is performed using limitor, phase shifter, multiplier, filter and adder. The corrected stereo difference signal $E_S'$ and the stereo sum signal $E_M$ are then fed to an output circuit like the above-mentioned unit 11 to get a stereophony output signal.

The drawback of the first three methods mentioned above is that a very quick switching from stereo to mono takes place when the RF-signal quality gets bad. According to these proposals only a very coarse decision is made and the listener has very often to listen to a mono signal even when it would be possible to have a low level channel separation. The fourth method, on the other hand, which allows a fine sliding, frequency selective stereo to mono blending dependent on the spectral distribution of the fm-demodulated stereo multiplex signal needs much calculation power and therefore includes high realisation costs.

Document US 5 253 299 discloses a noise reduction apparatus in an FM stereo tuner in which a noise reduction amount is variably controlled via a stereo difference signal, by variably setting reference level signals in stages that are used for taking into account a respective sub band or not dependent on the reception quality. The variable control is reciprocal to the field strength signal. It is, thus, proposed to perform a noise elimination processing in each of divisional frequency bands wherein a composite signal of a divisional stereo differential signal (L-R) is processed. Still, the noise elimiating effect may become insufficient if the reference level signals are not established appropriately and then suppress sub bands that might have well contributed to the desired stereo effect.

It is the object of the present invention to provide a method and a device to demultiplex a stereo multiplex signal offering a better stereo to mono blending without high realisation costs.

The method according to the invention is defined in claim 1 and the device according to the invention is defined in claim 16. Preferred embodiments of the present invention are respectively defined in the respective subclaims.

The demultiplexer according to the present invention that is working according to the inventive method performs a sliding stereo to mono blending taking the spectral distribution of the stereo difference signal and the RF-fieldstrength into account. Therefore, the frequency selective stereo to mono blending according to the present invention needs minimised calculation power while offering as much channel separation as possible in view of the received stereo multiplex signal.

Further objects, advantages and features of the present invention will be better understood from the following detailed description of preferred embodiments thereof taken in conjunction with the accompanying drawings, wherein

Fig. 1        shows a block diagram of a stereo demultiplexer according to the present invention;
Fig. 2a, b, c   show block diagrams of first embodiments of the control block shown in fig. 1;
Fig. 3        shows two possible transfer functions of the threshold and saturation block shown in fig. 2;
Fig. 4a, b, c   show block diagrams of second embodiments of the control block shown in fig. 1;
Fig. 5        shows stereo to mono transitions in accordance with the present invention;
Fig. 6        shows a block diagram of a stereo demultiplexer according to the prior art; and
Fig. 7        shows the amplitude spectrum of a frequency demodulated stereo multiplex signal.

As can be seen in Fig. 7, the signal to noise ratio of the stereo difference signal $s_d(t)= s_l(t)-s_r(t)$ is much lower than the signal to noise ratio of the stereo sum signal $s_s(t)=s_l(t)+s_r(t)$. Therefore, the stereo difference signal $s_d(t)$ should only be added to the stereo sum signal $s_s(t)$ when there is a good signal quality and a stereo signal is transmitted. Spoken programs are for example mainly transmitted in mono with the information of the stereo difference signal $s_d(t)$ being zero. If in this case the receiver works in stereo mode only the noise of the stereo difference signal $s_d(t)$ is added to the stereo sum signal $s_s(t)$. In this case, the receiver has to switch automatically to mono mode.

On the other hand, only those frequency components which contain information about the stereo difference signal $s_d(t)$ are important for the stereo demultiplexed output signal. Therefore, according to the present invention, the stereo difference signal $s_d(t)$ is split into subband signals $s_{dn}(t)$, $0<n\leq N$, N being the number of subbands, e. g. with a fixed bandwidth, and these subband signals can individually be multiplicated with a factor $0\leq k_n(t)\leq 1$ to generate a frequency selective weighted stereo difference signal $s_{dw}(t)$. The respective factor $k_n(t)$ with $0<n\leq N$ can be chosen dependent on the signal quality of the RF-signal, i. e. the amplitude, and the information content of this subband, i. e. the amplitude of this frequency band. Other information, e.g. the information content of the stereo sum signal or the spectral distribution of the stereo sum signal can also be taken into consideration.

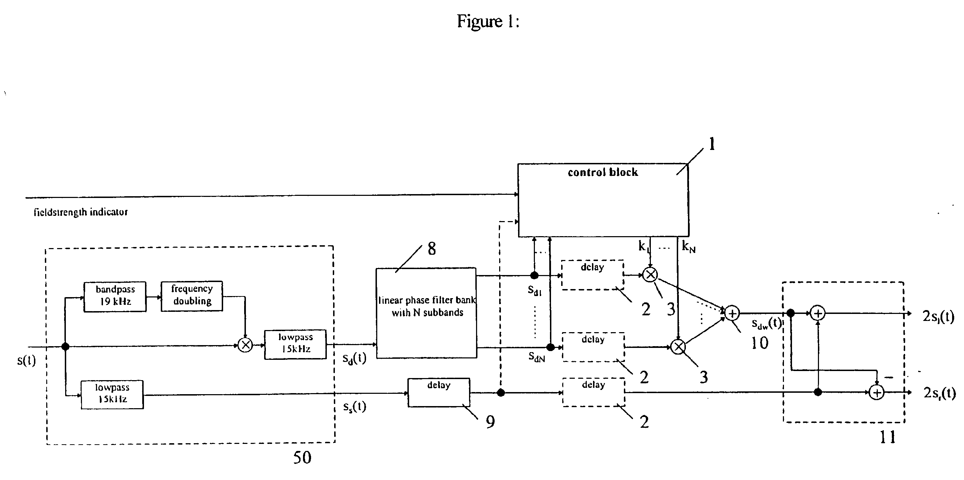

Fig. 1 shows a stereo demultiplexer according to the present invention. This stereo demultiplexer comprises the generator 50 to generate the stereo difference signal $s_d(t)$ and the stereo sum signal $s_s(t)$ at its input stage and the unit 11 to calculate the signals for the left audio channel and for the right audio channel $s_l(t)$ and $s_r(t)$ out of a frequency selective weighted stereo difference signal $s_{dw}(t)$ and a stereo sum signal $s_s(t)$ at its output stage. In between those both components a circuitry is arranged to calculate said frequency selective weighted stereo difference signal $s_{dw}(t)$ on basis of the stereo difference signal $s_d(t)$ output of the generator 50.

The circuitry shown in fig. 1 comprises a frequency selective weighting circuit in the path of the stereo difference signal $s_d(t)$ and a delay element 9 in the path of the stereo sum signal $s_s(t)$ for the compensation of the group delay in the path of the stereo difference signal $s_d(t)$ caused by a linear phase filter bank 8 included in the frequency selective weighting circuit. This linear phase filter bank 8 with N subbands divides the incoming stereo difference signal $s_d(t)$ into N subband signals $s_{d1}(t)$, ..., $s_{dN}(t)$ each of which is fed to a multiplier 3 which multiplies the respective subband signal $s_{dn}(t)$, $0<n\leq N$, with a respective weighting factor $k_n(t)$, $0<n\leq N$, before all subband signals $s_{dn}(t)$, $0<n\leq N$ being added with an adder 10 to the frequency selective weighted stereo difference signal $s_{dw}(t)$ which is than fed to the unit 11. All of the subband signals $s_{d1}(t)$, ... $s_{dn}(t)$ are also led to a control block 1 that is calculating the respective corresponding correction factors $k_1(t)$, ..., $k_N(t)$. This control block 1 also receives information about the signal quality of the RF-signal, i. e. the amplitude, from a fieldstrength indicator and depending on the control block 1 eventually also information about the stereo sum signal. Depending on the calculation time needed by the control block 1 to calculate the respective weighting factors $k_n(t)$, $0<n\leq N$, respective delay elements 2 can be inserted in front of the multipliers 3 and in the path of the stereo sum signal $s_s(t)$ that have a delay time compensating the calculation time of the control block 1.

As mentioned above, the control block 1 described subsequent calculates all weighting factors $0\leq k_n(t)\leq 1$, $0<n\leq N$, and therefore with $k_n(t)=0$ for all n the output signal of the stereo demultiplexer is the stereo sum signal $s_s(t)$ in the left audio channel and the right audio channel, i. e. the stereo demultiplexer has switched into mono mode, and if $k_n(t)=1$ for all n the output of the stereo demultiplexer is the stereo signal with maximum channel separation.

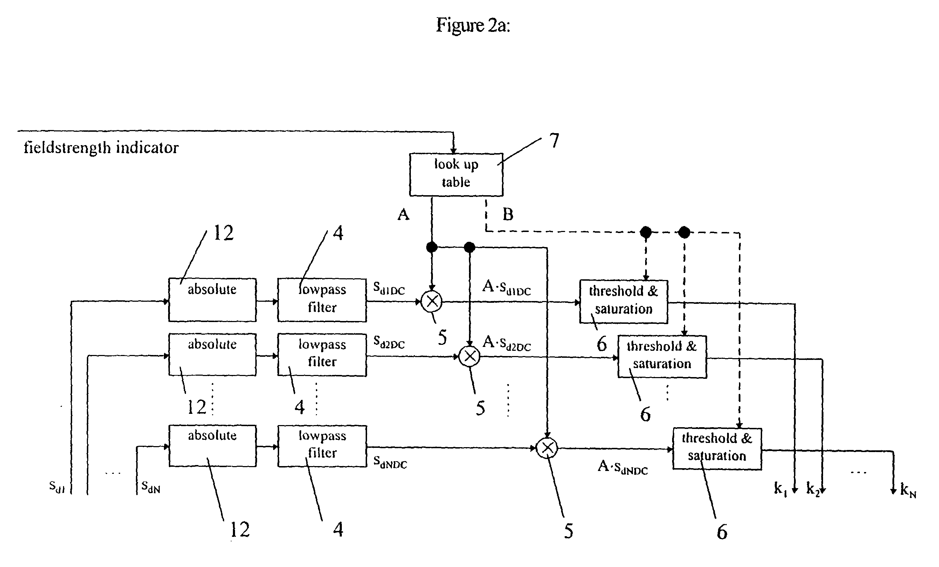

Fig. 2a shows the block diagram of the control block in a first embodiment according to the present invention. In the control block every input subband signal $s_{dn}(t)$, $0<n\leq N$, gets transformated into a weighting factor $k_n(t)$, $0<n\leq N$, corresponding to the respective subband signal. Therefore, each input subband signal $s_{dn}(t)$ is input into an absolute value unit 12 that calculates the absolute value of the corresponding subband signal $s_{dn}(t)$ to input it into a respective lowpass filter 4 that outputs an envelope signal $s_{dnDC}(t)$ of the respective subband signal $s_{dn}(t)$. Each of these envelope signals $S_{dnDC}(t)$, $0<n\leq N$ gets multiplied with a factor $A(t)$ by a multiplier 5. This factor $A(t)$ is generated by a generator 7 that is receiving a signal corresponding to the fieldstrength of the received RF-signal. Said generator 7 can be a look-up table. The respective output signal $A(t)\cdot s_{dnDC}(t)$ of the respective multiplier 5 is passed to a respective threshold and saturation block 6 to limit the signal $A(t)\cdot s_{dnDC}(t)$ to 1, since a correction factor of $k_n(t)=1$ means a maximum channel separation of the $n^{th}$ subband. This threshold and saturation block 6 can also perform a threshold function with the threshold value $B(t)$. In this case, the threshold value $B(t)$ also gets generated by the generator 7. This threshold is important, since a high noise in the stereo difference signal, i. e. a low fieldstrength, causes the factor $A(t)\cdot S_{dnDC}(t)$ to be even in program breaks higher than zero. Without the threshold a high noise in the stereo difference signal $s_{dn}(t)$ would result in a factor $k_n(t)>0$. If $k_n(t)>0$, then the noise of the stereo difference signal is added to the stereo sum signal even in program breaks.

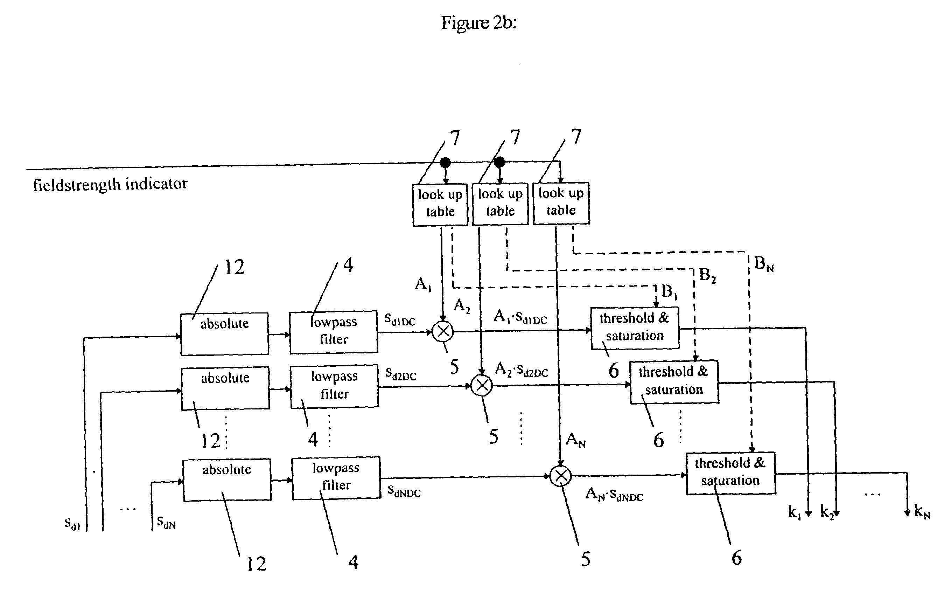

Figure 2b shows the control block 1 in a modified realization. The generator 7 is replaced by N generators 7 so that each subband of the stero difference signal $s_{dn}(t)$ can be weighted with a different factor $A_n(t)$, $0<n\leq N$. In this realization of the control block 1 the channel separation can be realized frequency dependent. In this way it can e.g. be taken into consideration that audio signals with low frequencies can not be located.

Of course it is also possible to replace the generator 7 shown in figure 2a by less than N generators 7 so that a group of subbands will be weighted with the same factor $A_m(t)$, $0<m\leq M<N$.

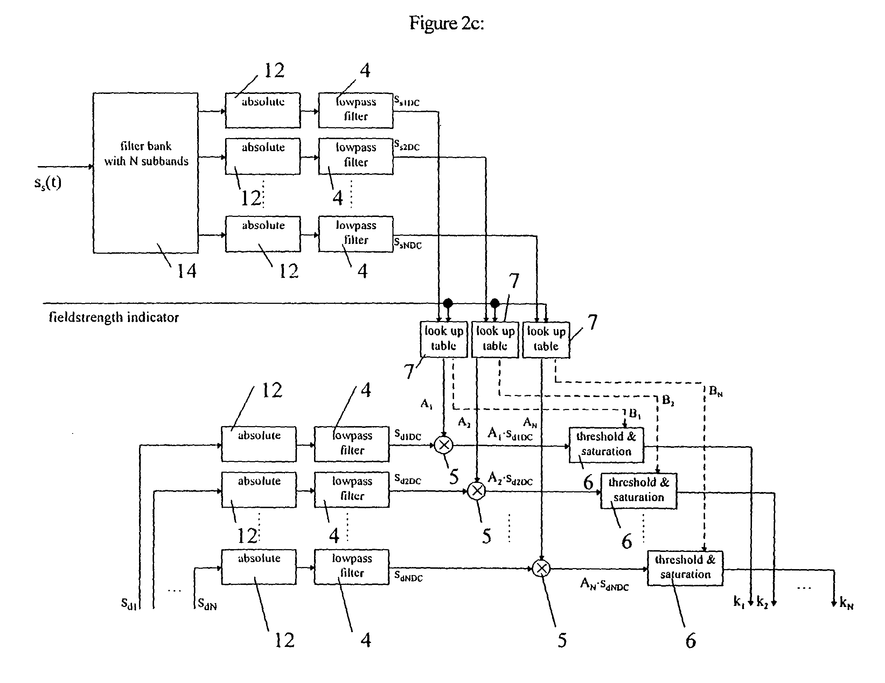

Figure 2c shows the control block 1 with modified generators 7. Each generator 7 generates the factor $A_n(t)$, $0<n\leq N$, dependent on the RF-fieldstrength and the amplitude of the envelopes of the subband signals of the stereo sum signal $s_s(t)$. Therefore a filterbank 14 calculates the subband signals $s_{sn}(t)$, $0<n\leq N$, of the stereo sum signal $s_s(t)$. The absolute values of each subband signal of the stereo sum signal $s_s(t)$ generated by respective absolut value units 12 are filtered by respective lowpass filters 4 to generate the respective envelope signal $s_{snDC}(t)$, $0<n\leq N$, of the corresponding subband signal $s_{sn}(t)$, $0<n\leq N$, of the stereo sum signal $s_s(t)$. It is not necessary that the filter bank 14 is a linear phase filter bank.

Of course it is also possible to replace the filter bank 14 with N subbands by a filterbank with less than N subbands and to connect the respective envelope signal of the subband signals to more than one generator 7 or to connect each envelope signal to one generator 7 and to use each factor $A_m(t)$, $0<m\leq M<N$ for a group of subbands of the stereo difference signal $s_d(t)$. It is also possible to replace the filter bank 14 by a delay element. In this case the envelope signal of the stereo sum signal is connected to all generators 7.

As indicated above, a combination of the embodiments shown in figures 2a to 2c is also possible.

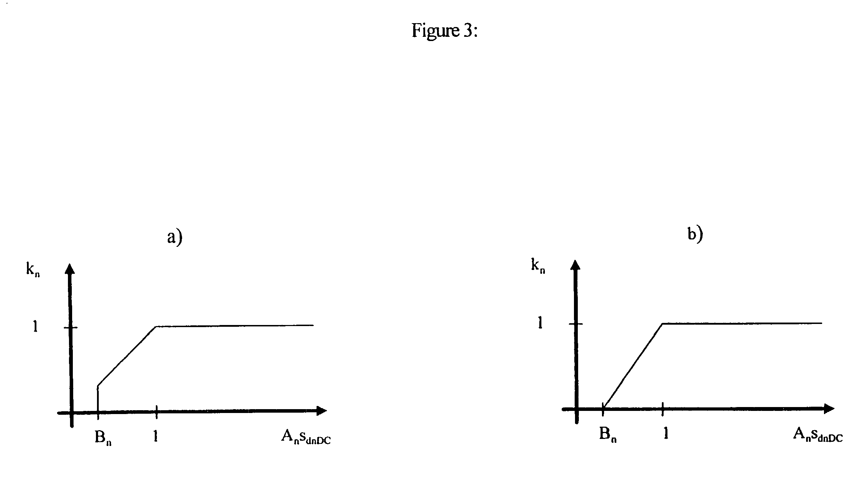

Fig. 3a shows a possible transfer function of the threshold and saturation block 6. The x-axis denotes the calculated value $A_n(t)\cdot s_{dnDC}(t)$ and the y-axis denotes the corresponding weighting factor $k_n(t)$. A value $A_n(t)\cdot s_{dnDC}(t)<B_n(t)$ corresponds to a correction factor $k_n(t)=0$. A value $A_n(t)\cdot s_{dnDC}(t)=B_n(t)$ corresponds to a correction factor $k_n(t)=B_n(t)$. A value $B_n(t)\leq A_n(t)\cdot s_{dnDC}(t)\leq 1$ corresponds in a linear fashion to a correction factor $B_n(t)\leq k_n(t)\leq 1$. A value $1\leq A_n(t)\cdot s_{dnDC}(t)$ corresponds to a correction factor $k_n(t)=1$.

Fig. 3b shows another possible transfer function of the threshold and saturation block 6 for a smoother transition from mono to stereo. The difference in between Figures 3a and 3b lies in the fact that a value $B_n(t)\leq A_n(t)\cdot s_{dnDC}(t)\leq 1$ corresponds in a linear fashion to a correction factor $0\leq k_n(t)\leq 1$. Of course, it is also possible to use a threshold and saturation block 6 having a different transfer function. The threshold $B_n(t)$ can either be fixed value or be chosen variable dependent on the fieldstrength indicator or be chosen variable dependent on the fieldstrength indicator and the stereo sum signal $s_s(t)$, as it is mentioned above.

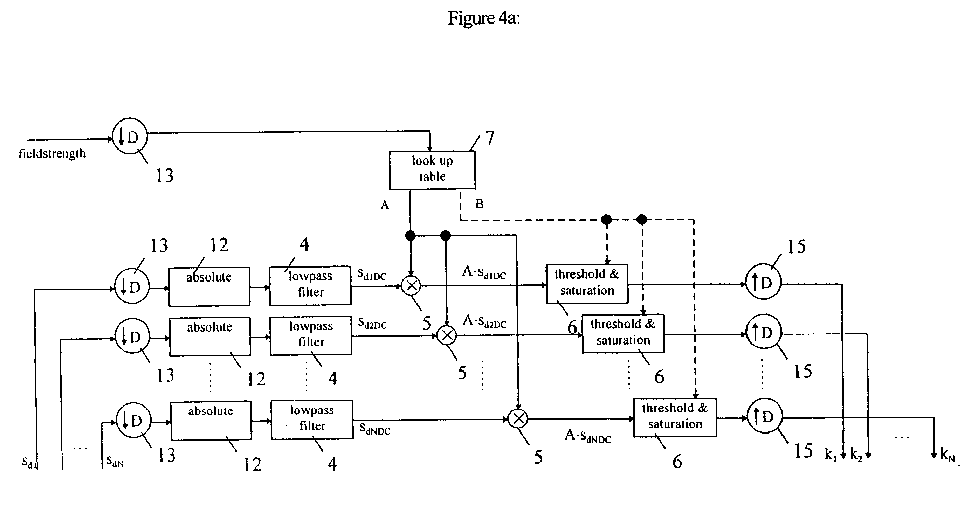

Fig. 4a shows the control block 1 in a second embodiment according to the present invention. In a digital solution the control block 1 can be realised very effective, since the sampling rate at the input of the control block can be decimated with a factor of D=10 or 20 or more due to the limited bandwidth of the subband signals $s_{dn}(t)$. D is depending on the number of subbands N. The decimation of the sampling rate is respectively performed before each respective absolute value unit 12 by a respective sampling rate decimation unit 13. Corresponding to the sampling rate decimation a sampling rate expansion has to be performed after each threshold and saturation block 6 by a respective sampling rate expansion unit 15. The sampling rate gets expanded with the same factor D as the decimation has been performed with. Also the sampling rate of the fieldstrength signal gets decimated with the factor D to have the same sampling rate as the other signals processed by the control block. The sampling rate in the control block can be reduced, since no stereo signal is passing through the control block, but the control block is just calculating the weighting factors $k_n(t)$. Therefore, the control block itself does not need the high sampling rate since the transition from stereo to mono must not be so fast as the processing of the stereo signal and the small spectrum of subbands allows a lower sampling rate without aliazing.

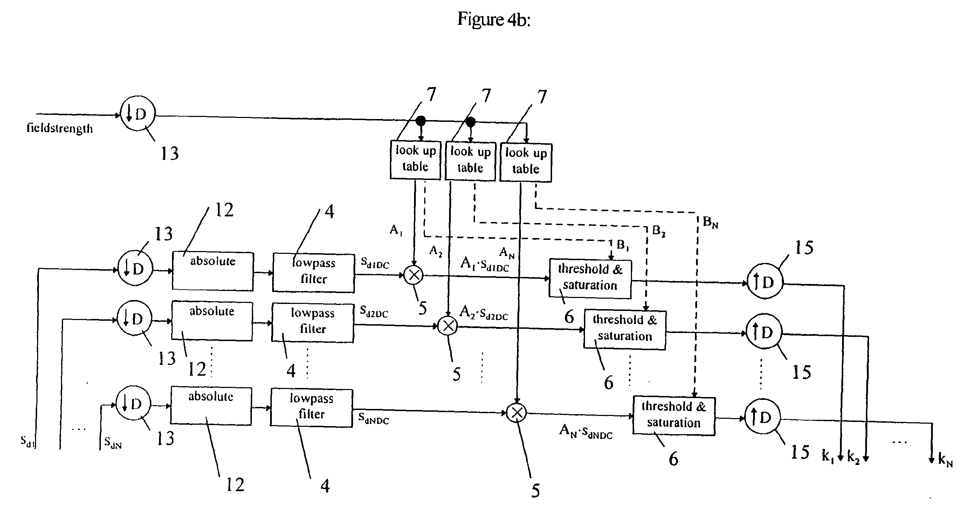

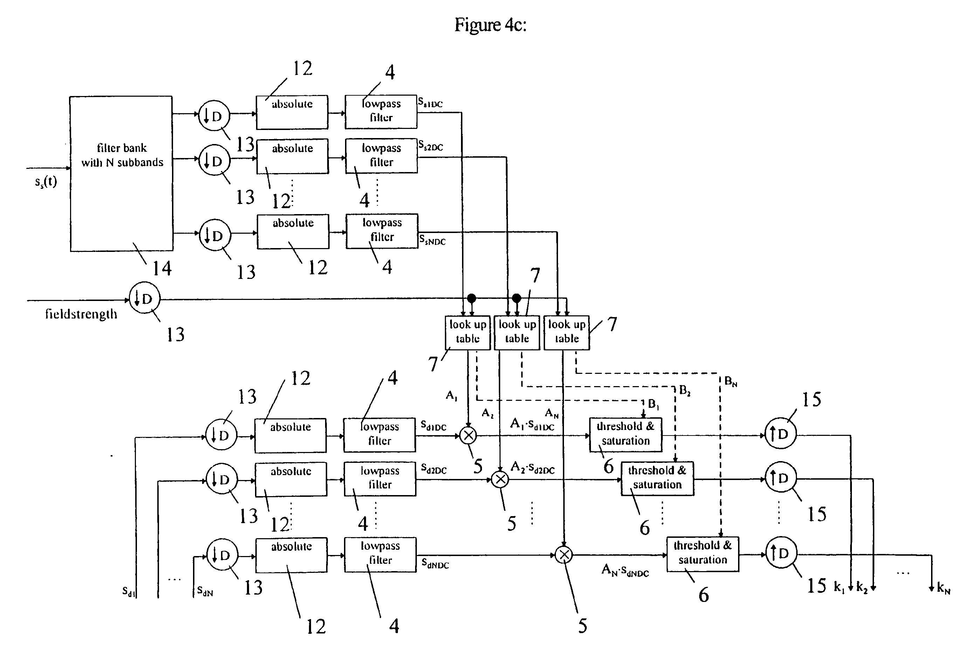

Figure 4 b shows the sampling rate decimated control block 1 with N generators 7 corresponding to the control block 1 shown in figure 2b.

Figure 4c shows the sampling rate decimated control block 1 with N generators 7 and a filter bank 14 for the calculation of the subband signals of the stereo sum signal $s_s(t)$ corresponding to the control block 1 shown in figure 2c. The filter bank 14 including a sampling rate decimation 13 at its output can be realized very efficient as it is described for example in "Multirate Digital Signal Processing" from Norbert J. Fliege.

Like the first embodiments of the control block according to the invention described in connection with figures 2a to 2c. also the second embodiments of the control block according to the present invention described above in connection with figures 4a to 4c can be combined.

In all of the above discussed embodiments according to the present invention a performance gain is achieved by inserting delay elements 2 in front of the N multipliers 3 that respectively have a delay dependent on the group delay of the lowpass filters 4 in the control block 1. This group delay compensation is important for a not-noticeable transition from mono mode to stereo mode and vice versa. In this case a delay element 2 that has a delay dependent on the group delay of the lowpass filters 4 in the control block 1 should also be inserted in the path of the stereo sum signal $s_s(t)$ before it is fed to the unit 11.

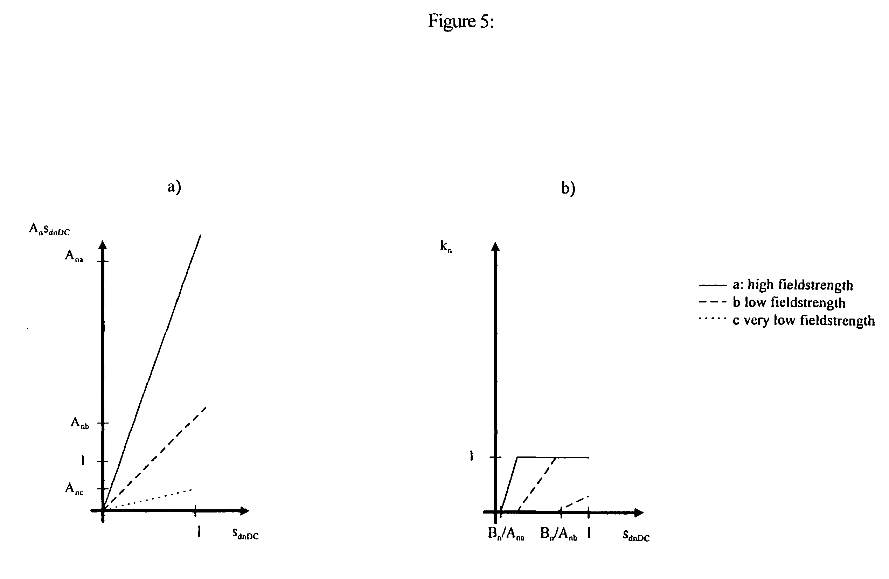

The best way to explain the advantages of the control block 1 is with three examples for high, low and very low fieldstrength. The following explanation refers to figure 5.

In case of a high fieldstrength, the factor $A_n(t)=A_{na}$ is high. In this case a low amplitude in the subband signals $s_{dn}(t)$ of the stereo difference signal $s_d(t)$ causes a low amplitude of the envelope signals $s_{dnDC}(t)$ which is multiplied with a high factor $A_n(t)=A_{na}$. The result $A_{na}\cdot s_{dnDC}(t)$ of this multiplication with the fieldstrength factor $A_n(t)$ is even for low envelope amplitudes greater than 1. The threshold and saturation block 6 limits $A_{na}\cdot S_{dnDC}(t)$ to the factor $k_n(t)=1$ so that every subband signal $s_{dn}(t)$ even with low information is added to the output of the stereo demultiplexer. This results in a stereo signal with the maximum channel separation. In case of a program break or a mono program, the stereo multiplexer blends back to mono mode, since $A_{na} \cdot s_{dnDC}(t)$ is smaller than the threshold $B_n(t)$ and therefore the factors $k_n(t)$ are zero.

In case of a low fieldstrength, the factor $A_n(t)=A_{nb}$ is chosen smaller. Therefore, only the subband signals $s_{dn}(t)$ with a high amplitude of the subband envelope signals $s_{dnDC}(t)$ cause a factor $k_n(t)=1$ so that only the subbands with high stereo information are added without weighting to the output of the stereo demultiplexer. In this case not the full channel separation can be achieved, but the channel separation is much better than in conventional receivers and also the noise floor is lower.

In case of a very low fieldstrength the fieldstrength factor $A_n(t)=A_{nc}$ is very low or zero so that the stereo demultiplexer blends to mono mode.

Fig. 5a shows the stereo to mono transition dependent on the amplitude of the envelope signal $s_{dnDC}(t)$ of the subband signal $s_{dn}(t)$ of the subband n in case of a high fieldstrength (solid line a), a low fieldstrength (dashed line b) and a very low fieldstrength (dotted line c). In case of a high fieldstrength the maximum channel separation is reached faster than in case of a low fieldstrength which in turn reaches it faster than in case of a very low fieldstrength. The x-axis denotes the envelope signal $s_{dnDC}(t)$ and the y-axis denotes the weighted envelope signal $A(t) \cdot s_{dnDC}(t)$. When the weighted envelope signal reaches a value of 1, the maximum channel separation of the corresponding subband is reached.

Fig. 5b shows the stereo to mono blending presented by the factor $k_n$ for each of the 3 above mentioned fieldstrenght values in case of a threshold and saturation block 6 transfer function as it is shown in Figure 3b.

The different channel separation for every subband dependent on the subband envelope has the following three advantages:

- In case of a low signal amplitude of the stereo multiplex signal, i. e. soft program parts, the stereo demultiplexer reduces the noise floor by reducing the channel separation, because in soft program parts the amplitude of the stereo difference signal is low and therefore the channel separation is also low. That means that with a decreasing amplitude the noise also decreases.
- In case of a high amplitude of the stereo multiplex signal, i. e. loud program parts, with the low stereo effect, i. e. low stereo difference signal amplitude, the stereo demultiplexer adds only the subbands with the main information to the stereo subband signal, so that the noise floor remains low. In case of loud program parts with low stereo difference signal amplitude the stereo effect is even with full channel separation low. Therefore, some subbands of the stereo difference signal can be neglected without audible effects, but with a better signal to noise ratio.
- In case of loud program parts with high stereo difference signal amplitude, i. e. mainly music programs, the channel separation is high, because the noise is covered by the music signal.

Therefore, the main advantageous differences between the invention and the prior art are an improved signal to noise ratio, an improved channel separation for a given signal to noise ratio and the miniaturized size of the needed signal processing device together with reduced realization costs, especially in a digital solution with a sampling rate decimation in front of the control block 1 and a sampling rate expansion behind the control block 1. These advantages are achieved by sliding, frequency selective stereo to mono blending dependent on a) the RF-signal amplitude and the spectral distribution of the stereo difference signal, or b) the RF-signal amplitude and the spectral distribution of the stereo sum signal and the stereo difference signal, or c) the RF-signal amplitude, the amplitude of the envelope of the stereo sum signal and the spectral distribution of the stereo difference signal.

Of course, also modulation dependent factors like they are disclosed in the DE 44 00 865 A1 can be used to control the weighting factors $k_n(t)$ of the respective subband n.

## Claims

1. Method to demultiplex a frequency demodulated stereo multiplex signal that is included in a received RF-signal and comprises a stereo difference signal ($s_d(t)$) and a stereo sum signal ($s_s(t)$), with a sliding, frequency selective stereo to mono blending dependent on the field strength of the received RF-signal and the spectral distribution of the stereo difference signal ($s_d(t)$), comprising:

    splitting the stereo difference signal ($s_d(t)$) into N subband signals ($S_{d1}(t), ..., S_{dN}(t)$),
    calculating N respective weighting factors $0 \le k_n(t) \le 1$, with $0 < n \le N$, corresponding to a respective one of the N subband signals ($s_{dn}(t)$);
    multiplying each of the subband signals ($s_{d1}(t), ..., s_{dN}(t)$) with said corresponding weighting factor $k_n(t)$, with

$0 < n \leq N$ ;

adding all N multiplied subband signals $(k_1(t) \cdot s_{d1}(t), ..., k_N(t) \cdot s_{dN}(t)]$ to become a frequency selective weighted stereo difference signal $(s_{dw}(t))$, and

adding or subtracting the frequency selective weighted stereo difference signal $(s_{dw}(t))$ to the stereo sum signal $(s_s(t))$,

**characterized in that**

at least one weighting factor $k_n(t)$ is dependent on the amplitude of the envelope of a corresponding subband signal $(s_{sn}(t))$ of the stereo sum signal $(s_s(t))$.

2. Method according to claim 1, **characterized in that** each of the N subband signals $(s_{d1}(t), ..., s_{dN}(t)]$ has a fixed bandwidth.

3. Method according to claim 1 or 2, **characterized in that** at least one weighting factor $k_n(t)$ is dependent on the amplitude of the received RF-signal.

4. Method according to anyone of claims 1 to 3, **characterized in that** at least one weighting factor $k_n(t)$ is dependent on the amplitude of the envelope of the corresponding subband signal $(s_{dn}(t))$ of the stereo difference signal $(s_d(t))$.

5. Method according to anyone of claims 1 to 4, **characterized in that** at least one weighting factor $k_n(t)$ is dependent on the amplitude of the envelope of the stereo sum signal $(s_s(t))$.

6. Method according to anyone of claims 1 to 5, **characterized in that** the calculation of the weighting factor $k_n(t)$, with $0 < n \leq N$, respectively comprises the following steps:

calculating the envelope $(s_{dnDC}(t))$ of the respective subband signal $(s_{dn}(t))$ of the stereo difference signal $(s_d(t))$ by low pass filtering the absolute value of the respective subband signal $(s_{dn}(t))$ of the stereo difference signal $(s_d(t))$,

multiplying said respective envelope $(s_{dnDC}(t))$ with a respective first factor $(A_n(t))$, and

performing a threshold function with a corresponding threshold value $(B_n(t))$ and limiting said multiplied envelope $(A_n(t) \cdot s_{dnDC}(t))$ to 1 to obtain the respective weighting factor $k_a(t)$.

7. Method according to anyone of claims 1 to 5, **characterized in that** the calculation of the weighting factor $k_n(t)$, with $0 < n \leq N$, respectively comprises the following steps in a digital system having a predetermined sampling rate:

decimating the sampling rate of the respective subband signal $(s_{dn}(t))$ of the stereo difference signal $(s_d(t))$ by a second factor (D) dependent on the bandwidth of said respective subband signal $(s_{dn}(t))$,

calculating the envelope $(s_{dnDC}(t))$ of said respective decimated subband signal $(s_{dn}(t))$ by low pass filtering the absolute value of said respective decimated subband signal $(s_{dn}(t))$,

multiplying said respective envelope $(s_{dnDC}(t))$ with a respective first factor $(A_n(t))$.

performing a threshold function with a corresponding threshold value $(B_n(t))$ and limiting said multiplied envelope $(A_n(t) \cdot s_{dnDC}(t))$ to 1 to obtain the respective weighting factor $k_n(t)$, and

expanding the sampling rate of the obtained weighting factor $k_n(t)$ by the second factor (D).

8. Method according to claim 6 or 7, **characterized in that** at least one first factor $(A_n(t))$ is generated dependent on the amplitude of the received RF-signal.

9. Method according to claim 6, 7 or 8, **characterized in that** at least one first factor $(A_n(t))$ is generated dependent on the amplitude of the envelope of a corresponding subband signal $(s_{sn}(t))$ of the stereo sum signal $(s_s(t))$.

10. Method according to anyone of claims 6 to 9, **characterized in that** at least one first factor $(A_n(t))$ is generated dependent on the amplitude of the envelope of the stereo sum signal $(s_s(t))$.

11. Method according to anyone of claims 6 to 10, **characterized in that** at least one threshold value $(B_n(t))$ is generated dependent on the amplitude of the received RF-signal.

12. Method according to anyone of claims 6 to 11, **characterized in that** at least one threshold value $(B_n(t))$ is generated dependent on the amplitude of the envelope of a corresponding subband signal $(s_{dn}(t))$ of the stereo sum signal $(s_s(t))$.

**13.** Method according to anyone of claims 6 to 12, **characterized in that** at least one threshold value ($B_n(t)$) is generated dependent on the amplitude of the envelope of the stereo sum signal ($s_s(t)$).

**14.** Device to demultiplex a stereo multiplex signal that is included in a received RF-signal and comprises a stereo difference signal ($s_d(t)$) and a stereo sum signal ($s_s(t)$), comprising
a linear phase filter bank (8) with N subbands receiving the stereo difference signal ($s_d(t)$) and dividing it into N subband signals ($s_{d1}(t), ... , s_{dN}(t)$).
a control block (1) receiving all N subband signals ($s_{d1}(t), ... , s_{dN}(t)$) of the stereo difference signal ($s_d(t)$) and calculating N weighting factors ($k_1(t), ... , k_N(t)$), respectively corresponding to one of the N subband signals ($S_{d1}(t), ... , s_{dN}(t)$),
N first multipliers (3) respectively receiving one of said N subband signals ($s_{d1}(t), ... , s_{dN}(t)$) to respectively multiply said subband signal ($s_{d1}(t), ... , s_{dN}(t)$) by the corresponding one of the calculated weighting factors ($k_1(t), ... , k_N(t)$),
an adder (10) receiving all N multiplied subband signals ($k_1(t){\cdot}s_{d1}(t), ... , k_N(t){\cdot}s_{dN}(t)$) to add them to a frequency selective weighted stereo difference signal ($s_{dw}(t)$), and
a unit (11) receiving the frequency selective weighted stereo difference signal ($s_{dw}(t)$) and a delayed stereo sum signal ($s_s(t)$) to calculate the signals for the left and right audio channel ($s_1(t), s_r(t)$),
**characterized by**
a first delay element (9) provided in the path of the stereo sum signal ($s_s(t)$) to compensate the group delay in the path of the stereo difference signal ($s_d(t)$) caused by the linear phase filter bank (8) and to provide said delayed stereo sum signal ($s_s(t)$) to said unit (11), and
said control block (1) is configured to receive the stereo sum signal ($s_s(t)$) and to calculate at least one of said N weighting factors ($k_1(t),..., k_N(t)$) based on the amplitude of the envelope of a corresponding subband signal ($s_{sn}(t)$) of the stereo sum signal ($s_s(t)$).

**15.** Device according to claim 14, **characterized by**
N second delay elements (2) respectively provided in front of said N first multipliers (3) to respectively delay the corresponding one of the N subband signals ($s_{d1}(t), ..., s_{dN}(t)$) for the time needed by the control block (1) to calculate the corresponding weighting factor ($k_n(t)$), and
one second delay element (2) provided in the path of the stereo sum signal ($s_s(t)$) before said unit (11) to delay the stereo sum signal ($s_s(t)$) for the time needed by the control block (1) to calculate the corresponding weighting factor ($k_n(t)$).

**16.** Device according to claim 14 or 15, **characterized in that** said control block (1) comprises
N calculation units (12, 4) respectively receiving one of the N subband signals ($s_{d1}(t), ..., s_{dN}(t)$) of the stereo difference signal ($s_d(t)$ to respectively calculate the corresponding envelope signal ($S_{dIDC}(t), ... , s_{dNDC}(t)$),
at least one generator (7) receiving a signal corresponding to the amplitude of the received RF-signal and generating respective first factors ($A_n(t)$) and respective threshold values ($B_n(t)$) in dependency on the amplitude of the received RF-signal,
N second multipliers (5) respectively receiving one of the N envelope-signals ($s_{dIDC}(t), ... , s_{dNDC}(t)$) to respectively multiply it with a corresponding one of said first factors ($A_n(t)$), and
N threshold and saturation blocks (6) respectively receiving one of the N multiplied envelope signals ($A_n(t){\cdot}s_{dIDC}(t), ... , A_n(t){\cdot}s_{dNDC}(t)$) to perform a threshold function with a corresponding one of said threshold values ($B_n(t)$) and limit the multiplied envelope ($A_n(t){\cdot}s_{dIDC}(t), ... , A_n(t){\cdot}s_{dNDC}(t)$) to 1 to respectively obtain the respective weighting factor ($k_n(t)$) corresponding to one of the N subband signals ($s_{dn}(t)$) of the stereo difference signal ($s_d(t)$.

**17.** Device according to claim 16, **characterized in that** said control block (1) comprises N sampling rate decimation units (13) respectively receiving one of the N subband signals ($s_{dn}(t)$) of the stereo difference signal ($s_d(t)$) to decimate its sampling rate by a second factor (D) dependent on the bandwidth of said respective subband signal ($s_{dn}(t)$) before outputting it to a corresponding one of the N calculation units (12, 4), and N sampling rate expansion units (15) respectively receiving a weighting factor ($k_n(t)$) from a corresponding threshold and saturation block (6) to expand its sampling rate by said second factor (D).

**18.** Device according to claim 16 or 17. **characterized in that** said at least one generator (7) also receives the stereo sum signal ($s_s(t)$) and generates a respective first factor ($A_n(t)$) and a respective threshold value ($B_n(t)$) in dependency on the amplitude of the envelope of the corresponding subband signal ($s_{sn}(t)$) of the stereo sum signal ($s_s(t)$).

**19.** Device according to claim 16 or 17, **characterized in that** said at least one generator (7) also receives the stereo sum signal ($s_s(t)$) and generates said respective first factors ($A_n(t)$) and a respective threshold value ($B_n(t)$) in

dependency on the amplitude of the envelope of the stereo sum signal ($s_s(t)$).

20. Device according to anyone of claims 16 to 19, **characterized in that** each of said N calculation units (12. 4) comprises an absolute value unit (12) receiving a respective subband signal ($s_{dn}(t)$) to respectively calculate the corresponding absolute value ($|s_{dn}(t)|$), and
a low pass filter (4) receiving the absolute value of a respective subband signal ($|s_{dn}(t)|$) to respectively output an envelope signal ($s_{dnDC}(t)$).

21. Device according to anyone of claims 16 to 20, **characterized in that** said at least one generator (7) comprises a look up table.

**Patentansprüche**

1. Verfahren zum Demultiplexieren eines frequenzdemodulierten Stereomultiplexsignals, das in einem empfangenen Hochfrequenzsignal 1 enthalten ist und ein Stereodifferenzsignal [$s_d(t)$] und ein Stereosummensignal [$s_s(t)$] aufweist, mit
einem gleitenden, frequenzselektiven Stereo-Monoübergang abhängig von der Feldstärke des empfangenen Hochfrequenzsignals und von der Spektralverteilung des Stereodifferenzsignals [$s_d(t)$], wobei das Verfahren aufweist:

Aufspalten des Stereodifferenzsignals [$s_d(t)$] in N Teilbandsignale [$s_{d1}(t),...,s_{dN}(t)$],
Berechnen von N jeweiligen Gewichtungsfaktoren $0 \leq k_n(t) \leq 1$, mit $0 < n \leq N$, entsprechend einem jeweiligen einzelnen der N Teilbandsignale [$s_{dn}(t)$];
Multiplizieren jedes der Teilbandsignale [$s_{d1}(t),...,s_{dN}(t)$] mit dem entsprechenden Gewichtungsfaktor $k_n(t)$, mit $0 < n \leq N$;
Addieren aller N multiplizierter Teilbandsignale [$k_1(t) \cdot s_{d1}(t),...,k_n(t) \cdot s_{dN}(t)$], um ein frequenzselektives, gewichtetes Stereodifferenzsignal [$s_{dw}(t)$] zu erhalten, und
Addieren oder Subtrahieren des frequenzselektiven, gewichteten Stereodifferenzsignals [$s_{dw}(t)$] zum/vom Stereosummensignal [$s_s(t)$],

**dadurch gekennzeichnet, dass**
wenigstens ein Gewichtungsfaktor $k_n(t)$ von der Amplitude der Einhüllenden eines entsprechenden Teilbandsignals [$s_{sn}(t)$] des Stereosummensignals [$s_s(t)$] abhängig ist.

2. Verfahren nach Anspruch 1, **dadurch gekennzeichnet, dass** jedes der N Teilbandsignale [$s_{d1}(t),..., s_{dN}(t)$] eine feste Bandbreite hat.

3. Verfahren nach Anspruch 1 oder 2, **dadurch gekennzeichnet, dass** wenigstens ein Gewichtungsfaktor $k_n(t)$ von der Amplitude des empfangenen Hochfrequenzsignals abhängt.

4. Verfahren nach einem der Ansprüche 1 bis 3, **dadurch gekennzeichnet, dass** wenigstens ein Gewichtungsfaktor $k_n(t)$ von der Amplitude der Einhüllenden des entsprechenden Teilbandsignals [$s_{dn}(t)$] des Stereodifferenzsignals [$s_d(t)$] abhängt.

5. Verfahren nach einem der Ansprüche 1 bis 4, **dadurch gekennzeichnet, dass** wenigstens ein Gewichtungsfaktor $k_n(t)$ von der Amplitude der Einhüllenden des Stereosummensignals [$s_s(t)$] abhängt.

6. Verfahren nach einem der Ansprüche 1 bis 5, **dadurch gekennzeichnet, dass** die Berechnung des Gewichtungsfaktors $k_n(t)$, mit $0 < n \leq N$ jeweils die folgenden Schritte aufweist:

Berechnen der Einhüllenden [$s_{dnDC}(t)$] des jeweiligen Teilbandsignals [$s_{dn}(t)$] des Stereodifferenzsignals [$s_d(t)$] durch Tiefpassfilterung des Absolutwerts des jeweiligen Teilbandsignals [$s_{dn}(t)$] des Stereodifferenzsignals [$s_d(t)$],
Multiplizieren der jeweiligen Einhüllenden [$s_{dnDC}(t)$] mit einem jeweiligen ersten Faktor [A(t)], und
Ausführen einer Schwellenfunktion mit einem entsprechenden Schwellenwert [B(t)] und Begrenzen der multiplizierten Einhüllenden [$A(t) \cdot s_{dnDC}(t)$] auf 1, um den jeweiligen Gewichtungsfaktor $k_n(t)$ zu erhalten.

7. Verfahren nach einem der Ansprüche 1 bis 5, **dadurch gekennzeichnet, dass** die Berechnung des Gewichtungs-

faktors $k_n(t)$, mit $0<n\leq N$, in einem Digitalsystem, das eine vorgegebene Abtastrate hat, jeweils die folgenden Schritte aufweist:

Dezimieren der Abtastrate des jeweiligen Teilbandsignals $[s_{dn}(t)]$ des Stereodifferenzsignals $[s_d(t)]$ um einen zweiten Faktor $[D]$ abhängig von der Bandbreite des jeweiligen Teilbandsignals $[s_{dn}(t)]$,
Berechnen der Einhüllenden $[s_{dnDC}(t)]$ des jeweiligen Teilbandsignals $[s_{dn}(t)]$ durch Tiefpassfilterung des Absolutwerts des jeweiligen dezimierten Teilbandsignals $[s_{dn}(t)]$,
Multiplizieren der jeweiligen Einhüllenden $[s_{dnDC}(t)]$ mit einem jeweiligen ersten Faktor $[A_n(t)]$,
Ausführen einer Schwellenfunktion mit einem entsprechenden Schwellenwert $[B_n(t)]$ und Begrenzen der multiplizierten Einhüllenden $[A_n(t)\cdot s_{dnDC}(t)]$ auf 1, um den jeweiligen Gewichtungsfaktor $k_n(t)$ zu erhalten, und
Ausdehnen der Abtastrate des erhaltenen Gewichtungsfaktors $k_n(t)$ um den zweiten Faktor (D).

8. Verfahren nach Anspruch 6 oder 7, **dadurch gekennzeichnet, dass** wenigstens ein erster Faktor $[A_n(t)$ abhängig von der Amplitude des empfangenen Hochfrequenzsignals erzeugt wird.

9. Verfahren nach Anspruch 6, 7 oder 8, **dadurch gekennzeichnet, dass** wenigstens ein erster Faktor $[A_n(t)]$ abhängig von der Amplitude der Einhüllenden eines entsprechenden Teilbandsignals $[s_{sn}(t)]$ des Stereosummensignals $[s_s(t)]$ erzeugt wird.

10. Verfahren nach einem der Ansprüche 6 bis 9, **dadurch gekennzeichnet, dass** wenigstens ein erster Faktor $[A_n(t)$ abhängig von der Amplitude der Einhüllenden des Stereosummensignals $[s_s(t)]$ erzeugt wird.

11. Verfahren nach einem der Ansprüche 6 bis 10, **dadurch gekennzeichnet, dass** wenigstens ein Schwellenwert $[B_n(t)]$ abhängig von der Amplitude des empfangenen Hochfrequenzsignals erzeugt wird.

12. Verfahren nach einem der Ansprüche 6 bis 11, **dadurch gekennzeichnet, dass** wenigstens ein Schwellenwert $[B_n(t)]$ abhängig von der Amplitude der Einhüllenden eines entsprechenden Teilbandsignals $[s_{sn}(t)]$ des Stereosummensignals $[s_s(t)]$ erzeugt wird.

13. Verfahren nach einem der Ansprüche 6 bis 12, **dadurch gekennzeichnet, dass** wenigstens ein Schwellenwert $[B_n(t)]$ abhängig von der Amplitude der Einhüllenden des Stereosummensignals $[s_s(t)]$ erzeugt wird.

14. Vorrichtung zum Demultiplexieren eines frequenzdemodulierten Stereomultiplexsignals, das in einem empfangenen Hochfrequenzsignal enthalten ist und ein Stereodifferenzsignal $[s_d(t)]$ und ein Stereosummensignal $[s_s(t)]$ aufweist, wobei die Vorrichtung aufweist:

eine lineare Phasenfilterbank (8) mit N Teilbändern, die das Stereodifferenzsignal $[s_d(t)]$ empfängt und es in N Teilbandsignale $[s_{d1}(t),..., s_{dN}(t)]$ teilt,
einen Steuerblock (1), der alle N Teilbandsignale $[s_{d1}(t),..., s_{dN}(t)]$ des Stereodifferenzsignal $[s_d(t)]$ empfängt und N Gewichtungsfaktoren $[k_1(t),...,k_N(t)]$ jeweils entsprechend einem der N Teilbandsignale $[s_{d1}(t),..., s_{dN}(t)]$ berechnet,
N erste Multiplizierer (3), die jeweils eines der N Teilbandsignale $[s_{d1}(t),..., s_{dN}(t)]$ empfangen, um das jeweilige Teilbandsignal $[s_{d1}(t),..., s_{dN}(t)]$ jeweils mit dem entsprechenden berechneten Gewichtungsfaktor $[k_1 t,...,k_N(t)]$ zu multiplizieren,
einen Addierer (10), der alle N multiplizierten Teilbandsignale $[k_1(t) \cdot s_{d1}(t),..., k_N(t) \cdot s_{dN}(t)]$ empfängt und sie zu einem frequenzselektiven, gewichteten Stereodifferenzsignal $[S_{dw}(t)]$ addiert, und
eine Einheit (11), die das frequenzselektive, gewichtete Stereodifferenzsignal $[s_{dw}(t)]$ und ein verzögertes Stereosummensignal $[s_s(t)]$ empfängt, um die Signale für den linken und rechten Audiokanal $[s_1(t),s_r(t)]$ zu berechnen,
**gekennzeichnet durch**
ein erstes Verzögerungselement (9), das in dem Weg des Stereosummensignals $[s_s(t)]$ vorgesehen ist, um die **durch** die lineare Phasenfilterbank (8) verursachte Gruppenverzögerung in dem Weg des Stereodifferenzsignals $[s_d(t)]$ zu kompensieren und um das verzögerte Stereosummensignal $[s_s(t)]$ der Einheit (11) zur Verfügung zu stellen, und
wobei der Steuerblock (1) zum Empfang des Stereosummensignals $[s_s(t)]$ und zur Berechnung wenigstens eines der N Gewichtungsfaktoren $[k_1(t),...,k_N(t)]$ auf der Grundlage der Amplitude der Einhüllenden eines entsprechenden Teilbandsignals $[s_{sn}(t)]$ des Stereosummensignals $[s_s(t)]$ eingerichtet ist.

**15.** Vorrichtung nach Anspruch 14, **gekennzeichnet durch**

N zweite Verzögerungselemente (2), die jeweils vor den N ersten Multiplizierern (3) vorgesehen sind, um das eine entsprechende der N Teilbandsignale $[s_{d1}(t),..., s_{dN}(t)]$ um die Zeitdauer zu verzögern, die vom Steuerblock (1) zur Berechnung des jeweiligen Gewichtungsfaktors $[k_n(t)]$ benötigt wird, und

ein zweites Verzögerungselement (2), das in dem Weg des Stereosummensignals $[s_s(t)]$ vor der Einheit (11) vorgesehen ist, um das Stereosummensignal $[s_s(t)]$ um die Zeitdauer zu verzögern, die der Steuerblock (1) zur Berechnung des entsprechenden Gewichtungsfaktors $[k_n(t)]$ benötigt.

**16.** Vorrichtung nach Anspruch 14 oder 15, **dadurch gekennzeichnet, dass** der Steuerblock (1) aufweist

N Recheneinheiten (12,4), die jeweils eines der N Teilbandsignale $[s_{d1}(t),...,s_{dN}(t)]$ des Stereodifferenzsignals $[s_d(t)]$ empfangen, um jeweils das entsprechende Einhüllendensignal $[s_{dIDC}(t),...S_{dNDC}(t)]$ zu berechnen,

wenigstens einen Generator (7), der ein Signal empfängt, das der Amplitude des empfangenen Hochfrequenzsignals entspricht, und der jeweilige erste Faktoren $[A_n(t)]$ und jeweilige Schwellenwerte $[B_n(t)]$ in Abhängigkeit von der Amplitude des empfangenen Hochfrequenzsignals erzeugt,

N zweite Multiplizierer (5), die jeweils eines der N Einhüllendensignale $[s_{dIDC}(t),...s_{dNDC}(t)]$ empfangen und es jeweils mit einem entsprechenden der ersten Faktoren $[A_n(t)]$ multiplizieren, und

N Schwellen- und Sättigungsblöcke (6), die jeweils eines der N multiplizierten Einhüllendensignale $[A_n(t) \cdot s_{dIDC}(t),..., A_n(t) \cdot s_{dNDC}(t)]$ empfangen, eine Schwellenfunktion ausführen und die multiplizierte Einhüllende $[A_n(t) \cdot s_{dIDC}(t),..., A_n(t) \cdot s_{dNDC}(t)]$ auf 1 begrenzen, um jeweils den jeweiligen Gewichtungsfaktor $[k_n(t)]$ zu erhalten, der einem der N Teilbandsignale $[s_{dn}(t)]$ des Stereodifferenzsignals $[s_d(t)]$ entspricht.

**17.** Vorrichtung nach Anspruch 16, **dadurch gekennzeichnet, dass** der Steuerblock (1) N Dezimiereinheiten (13) für die Abtastrate, die jeweils eines der N Teilbandsignale $[s_{dn}(t)]$ des Stereodifferenzsignals $[s_d(t)]$ empfangen und dessen Abtastrate um einen zweiten Faktor (D) abhängig von der Bandbreite des jeweiligen Teilbandsignals $[s_{dn}(t)]$ dezimieren, bevor sie es an eine entsprechende der N Recheneinheiten (12,4) ausgeben, und N Expansionseinheiten (15) für die Abtastrate aufweist, die von einem entsprechenden Schwellen- und Sättigungsblock (6) jeweils einen Gewichtungsfaktor $[k_n(t)]$ empfangen, um dessen Abtastrate um den zweiten Faktor (D) auszudehnen.

**18.** Vorrichtung nach Anspruch 16 oder 17, **dadurch gekennzeichnet, dass** der wenigstens eine Generator (7) das Stereosummensignal $[s_s(t)]$ auch empfängt und einen jeweiligen ersten Faktor $[A_n(t)]$ und einen jeweiligen Schwellenwert $[B_n(t)]$ abhängig von der Amplitude der Einhüllenden des jeweiligen Teilbandsignals $[s_{sn}(t)]$ des Stereosummensignals $[s_s(t)]$ erzeugt.

**19.** Vorrichtung nach Anspruch 16 oder 17, **dadurch gekennzeichnet, dass** der wenigstens eine Generator (7) das Stereosummensignal $[s_s(t)]$ auch empfängt und die jeweiligen ersten Faktoren $[A_n(t)]$ und einen jeweiligen Schwellenwert $[B_n(t)]$ abhängig von der Amplitude der Einhüllenden des Stereosummensignals $[s_s(t)]$ erzeugt.

**20.** Vorrichtung nach einem der Ansprüche 16 bis 19, **dadurch gekennzeichnet, dass** die N Recheneinheiten (12,4) aufweisen

eine Absolutwerteinheit (12), die ein jeweiliges Teilbandsignal $[s_{dn}(t)]$ zur jeweiligen Berechnung des entsprechenden Absolutwerts $[|s_{dn}(t)|]$ empfängt, und

ein Tiefpassfilter (4), das den Absolutwert eines jeweiligen Teilbandsignals $[|s_{dn}(t)|]$ empfängt, um ein jeweiliges Einhüllendensignal $[s_{dnDC}(t)]$ auszugeben.

**21.** Vorrichtung nach einem der Ansprüche 16 bis 20, **dadurch gekennzeichnet, dass** der wenigstens eine Generator (7) eine Verweistabelle enthält.

**Revendications**

**1.** Procédé de démultiplexage d'un signal multiplex stéréo démodulé en fréquence qui est inclus dans un signal RF reçu et qui comprend un signal de différence stéréo $(s_d(t))$ et un signal de somme stéréo $(s_s(t))$, comprenant un mélange stéréo/mono glissant et à sélection de fréquence selon l'intensité de champ du signal RF reçu et la répartition spectrale du signal de différence stéréo $(s_d(t))$, comprenant :

la séparation du signal de différence stéréo $(s_d(t))$ en N signaux de sous-bande $(s_{d1}(t))$, ..., $S_{dN}(t))$, le calcul de N facteurs de pondération respectifs $0 \leq k_n(t) \leq 1$, avec $0 < n \leq N$, correspondant à l'un des N signaux de sous-bande respectif $(s_{dn}(t))$ ;

la multiplication de chacun des signaux de sous-bande ($s_{d1}(t)$), ..., ($s_{dN}(t)$) par ledit facteur de pondération correspondant $k_n(t)$, avec $0 < n \leq N$ ;

l'addition de l'ensemble des N signaux de sous-bande multipliés ($k_1(t)*s_{d1}(t)$, ..., $k_N(t)*s_{dN}(t)$) afin qu'ils deviennent un signal de différence stéréo pondéré à sélection de fréquence ($s_{dw}(t)$), et

l'addition ou la soustraction du signal de différence stéréo pondéré à sélection de fréquence ($s_{dw}(t)$) au signal de somme stéréo ($s_s(t)$),

**caractérisé en ce que**

au moins un facteur de pondération $k_n(t)$ dépend de l'amplitude de l'enveloppe d'un signal de sous-bande correspondant ($s_{sn}(t)$) du signal de somme stéréo ($s_s(t)$).

2. Procédé selon la revendication 1, **caractérisé en ce que** chacun des N signaux de sous-bande ($s_{a1}(t)$, ..., $s_{dN}(t)$) possède une bande passante fixe.

3. Procédé selon la revendication 1 ou 2, **caractérisé en ce qu'**au moins un facteur de pondération $k_n(t)$ dépend de l'amplitude du signal RF reçu.

4. Procédé selon l'une quelconque des revendications 1 à 3, **caractérisé en ce qu'**au moins un facteur de pondération $k_n(t)$ dépend de l'amplitude de l'enveloppe du signal de sous-bande correspondant ($s_{dn}(t)$) du signal de différence stéréo ($s_d(t)$).

5. Procédé selon l'une quelconque des revendications 1 à 4, **caractérisé en ce qu'**au moins un facteur de pondération $k_n(t)$ dépend de l'amplitude de l'enveloppe du signal de somme stéréo ($s_s(t)$).

6. Procédé selon l'une quelconque des revendications 1 à 5, **caractérisé en ce que** le calcul du facteur de pondération $k_n(t)$, avec $0 < n \leq N$, comprend respectivement les étapes suivantes :

le calcul de l'enveloppe ($s_{dnDC}(t)$) du signal de sous-bande respectif ($s_{dn}(t)$) du signal de différence stéréo ($s_d(t)$) par un filtrage passe-bas de la valeur absolue du signal de sous-bande respectif ($s_{dn}(t)$) du signal de différence stéréo ($s_d(t)$),

la multiplication de ladite enveloppe respective ($s_{dnDC}(t)$) par un premier facteur respectif ($A_n(t)$), et

la réalisation d'une fonction de seuil avec une valeur de seuil correspondante ($B_n(t)$) et la limitation de ladite enveloppe multipliée ($A_n(t)*s_{dnDC}(t)$) à 1 afin d'obtenir le facteur de pondération respectif $k_n(t)$.

7. Procédé selon l'une quelconque des revendications 1 à 5, **caractérisé en ce que** le calcul du facteur de pondération $k_n(t)$, avec $0 < n \leq N$, comprend respectivement les étapes suivantes dans un système numérique ayant une vitesse d'échantillonnage prédéterminée :

la décimation de la vitesse d'échantillonnage du signal de sous-bande respectif ($s_{dn}(t)$) du signal de différence stéréo ($s_d(t)$) par un second facteur (D) selon la bande passante dudit signal de sous-bande respectif ($s_{dn}(t)$),

le calcul de l'enveloppe ($s_{dnDC}(t)$) dudit signal de sous-bande décimé respectif ($s_{dn}(t)$) par un filtrage en passe-bas de la valeur absolue dudit signal de sous-bande décimé respectif ($s_{dn}(t)$),

la multiplication de ladite enveloppe respective ($s_{dnDC}(t)$) par un premier facteur respectif ($A_n(t)$),

la réalisation d'une fonction de seuil avec une valeur de seuil correspondante ($B_n(t)$) et la limitation de ladite enveloppe multipliée ($A_n(t)*(s_{dnDC}(t)$) à 1 afin d'obtenir le facteur de pondération respectif $k_n(t)$, et

l'extension de la vitesse d'échantillonnage du facteur de pondération obtenu $k_n(t)$ par le second facteur (D).

8. Procédé selon la revendication 6 ou 7, **caractérisé en ce qu'**au moins un premier facteur ($A_n(t)$) est généré selon l'amplitude du signal RF reçu.

9. Procédé selon la revendication 6, 7 ou 8, **caractérisé en ce qu'**au moins un premier facteur ($A_n(t)$) est généré selon l'amplitude de l'enveloppe d'un signal de sous-bande correspondant ($s_{sn}(t)$) du signal de somme stéréo ($s_s(t)$).

10. Procédé selon l'une quelconque des revendications 6 à 9, **caractérisé en ce qu'**au moins un premier facteur ($A_n(t)$) est généré selon l'amplitude de l'enveloppe du signal de somme stéréo ($s_s(t)$).

11. Procédé selon l'une quelconque des revendications 6 à 10, **caractérisé en ce qu'**au moins une valeur de seuil ($B_n(t)$) est générée selon l'amplitude du signal RF reçu.

**12.** Procédé selon l'une quelconque des revendications 5 à 11, **caractérisé en ce qu'**au moins une valeur de seuil ($B_n$(t)) est générée selon l'amplitude de l'enveloppe d'un signal de sous-bande correspondant ($s_{sn}$(t)) du signal de somme stéréo ($s_s$(t)).

**13.** Procédé selon l'une quelconque des revendications 6 à 12, **caractérisé en ce qu'**au moins une valeur de seuil ($B_n$(t)) est générée selon l'amplitude de l'enveloppe du signal de somme stéréo ($s_s$(t)).

**14.** Dispositif de démultiplexage d'un signal multiplex stéréo qui est inclus dans un signal RF reçu et qui comprend un signal de différence stéréo ($s_d$(t)) et un signal de somme stéréo ($s_s$(t)), comprenant
une banque de filtres à phase linéaire (8) ayant N sous-bandes recevant le signal de différence stéréo ($s_d$(t)) et le divisant en N signaux de sous-bande ($s_{d1}$(t)), ..., $s_{dN}$(t)),
un bloc de commande (1) recevant tous les N signaux de sous-bande ($s_{d1}$(t), ... , $s_{dN}$(t)) du signal de différence stéréo ($s_d$(t)) et calculant N facteurs de pondération ($k_1$(t), ..., $k_N$(t)), correspondant respectivement à l'un des N signaux de sous-bande ($s_{d1}$(t), ..., $s_{dN}$(t)),
N premiers multiplicateurs (3) recevant respectivement l'un desdits N signaux de sous-bande ($s_{d1}$(t), ..., $s_{dN}$(t)) afin de multiplier respectivement ledit signal de sous-bande ($s_{d1}$(t), ..., $s_{dN}$(t)) par l'un des facteurs de pondération calculés correspondant ($k_1$(t), ..., $k_N$(t)),
un additionneur (10) recevant l'ensemble des N signaux de sous-bande multipliés ($k_1$(t)\*$s_{d1}$(t)), ..., $k_N$(t)\*$s_{dN}$(t)) afin de les ajouter à un signal de différence stéréo pondéré à sélection de fréquence ($s_{dw}$(t)), et
une unité (11) recevant le signal de différence stéréo pondéré à sélection de fréquence ($s_{dw}$(t)) et un signal de somme stéréo retardé ($s_s$(t) afin de calculer les signaux pour le canal audio de gauche et de droite ($s_l$(t), $s_r$(t)),
**caractérisé par**
un premier élément de retard (9) prévu sur le trajet du signal de somme stéréo ($s_s$(t)) afin de compenser le retard de groupe sur le trajet du signal de différence stéréo ($s_d$(t)) provoqué par la banque de filtres à phase linéaire (8) et de fournir ledit signal de somme stéréo retardé ($s_s$(t)) à ladite unité (11), et
ledit bloc de commande (1) est configuré afin de recevoir le signal de somme stéréo ($s_s$(t)) et de calculer au moins l'un desdits N facteurs de pondération ($k_1$(t), ..., $k_N$(t)) sur la base de l'amplitude de l'enveloppe d'un signal de sous-bande correspondant ($s_{sn}$(t)) du signal de somme stéréo ($s_s$(t)).

**15.** Dispositif selon la revendication 14, **caractérisé par**
N seconds éléments de retard (2) respectivement prévus en face desdits N premiers multiplicateurs (3) afin de retarder respectivement l'un des N signaux de bande correspondant ($s_{d1}$(t), ..., $s_{dN}$(t)) pendant la durée requise par le bloc de commande (1) afin de calculer le facteur de pondération correspondant ($k_n$(t)), et
Un second élément de retard (2) prévu sur le trajet du signal de somme stéréo ($s_s$(t)) avant ladite unité (11) afin de retarder le signal de somme stéréo ($s_s$(t)) pendant la durée requise par le bloc de commande (1) afin de calculer le facteur de pondération correspondant ($k_n$(t)).

**16.** Dispositif selon la revendication 14 ou 15, **caractérisé en ce que** ledit bloc de commande (1) comprend
N unités de calcul (12, 4) recevant respectivement l'un des N signaux de sous-bande ($s_{d1}$(t), ..., $s_{dN}$(t)) du signal de différence stéréo ($s_d$(t)) afin de calculer respectivement le signal d'enveloppe correspondant ($s_{d1DC}$(t), ..., ($S_{dNDC}$(t)),
au moins un générateur (7) recevant un signal correspondant à l'amplitude du signal RF reçu et générant des premiers facteurs respectifs ($A_n$(t)) et des valeurs de seuil respectives ($B_n$(t)) selon l'amplitude du signal RF reçu,
N seconds multiplicateurs (5) recevant respectivement l'un des N signaux d'enveloppe ($s_{d1DC}$(t), ..., $s_{dNDC}$(t)) afin de le multiplier par l'un desdits premiers facteurs correspondant ($A_n$(t)), et
N blocs de seuil et de saturation (6) recevant respectivement l'un des N signaux d'enveloppe multipliés ($A_n$(t)\*($S_{d1DC}$(t), ..., $A_n$(t)\*$s_{dNDC}$(t)) afin d'effectuer une fonction de seuil avec l'une desdites valeurs de seuil correspondante ($B_n$(t)) et de limiter l'enveloppe multipliée ($A_n$(t)\*$s_{d1DC}$(t), ..., $A_n$(t)\*$s_{dNDC}$(t)) à 1 afin d'obtenir respectivement le facteur de pondération respectif ($k_N$(t)) correspondant à l'un des N signaux de sous-bande ($s_{dn}$(t)) du signal de différence stéréo ($s_d$(t).

**17.** Dispositif selon la revendication 16, **caractérisé en ce que** ledit bloc de commande (1) comprend N unités de décimation de vitesse d'échantillonnage (13) recevant respectivement l'un des N signaux de sous-bande ($s_{dn}$(t))) du signal de différence stéréo ($s_d$(t)) afin de décimer sa vitesse d'échantillonnage par un second facteur (D)selon la bande passante dudit signal de sous-bande respectif ($s_{dn}$(t)) avant de le transmettre à l'une des N unités de calcul correspondante (12, 4), et N unités d'extension de vitesse d'échantillonnage (15) recevant respectivement un facteur de pondération ($k_n$(t)) de la part d'un bloc de seuil et de saturation correspondant (6) afin d'étendre sa vitesse d'échantillonnage par ledit second facteur (D).

**18.** Dispositif selon la revendication 16 ou 17, **caractérisé en ce que** ledit générateur au moins (7) reçoit également le signal de somme stéréo ($s_s$(t)) et génère un premier facteur respectif ($A_n$(t)) et une valeur de seuil respective ($B_n$(t)) selon l'amplitude de l'enveloppe du signal de sous-bande correspondant ($s_{sn}$(t)) du signal de somme stéréo ($s_s$(t)).

**19.** Dispositif selon la revendication 16 ou 17, **caractérisé en ce que** ledit générateur au moins (7) reçoit également le signal de somme stéréo ($s_s$(t)) et génère lesdits premiers facteurs respectifs ($A_n$(t)) et une valeur de seuil respective ($B_n$(t)) selon l'amplitude de l'enveloppe du signal de somme stéréo ($s_s$(t)).

**20.** Dispositif selon l'une quelconque des revendications 16 à 19, **caractérisé en ce que** chacune desdites N unités de calcul (12, 4) comprend
une unité de valeur absolue (12) recevant un signal de sous-bande respectif ($s_{dN}$(t)) afin de calculer respectivement la valeur absolue correspondante ($|s_{dn}$(t)|), et
un filtre passe-bas (4) recevant la valeur absolue d'un signal de sous-bande respectif ($|(s_{dn}$(t)|) afin de transmettre respectivement un signal d'enveloppe ($s_{dNDC}$(t)).

**21.** Dispositif selon l'une quelconque des revendications 16 à 20, **caractérisé en ce que** ledit générateur au moins (7) comprend une table de conversion.

Figure 1:

Figure 2a:

Figure 2b:

Figure 2c:

EP 0 955 732 B1

Figure 3:

Figure 4a:

EP 0 955 732 B1

Figure 4b:

EP 0 955 732 B1

Figure 4c:

EP 0 955 732 B1

Figure 5:

a)

b)

a: high fieldstrength
b low fieldstrength
c very low fieldstrength

Figure 6:

EP 0 955 732 B1

Figure 7:

EP 0 955 732 B1

$$s_s(t) = s_l(t) + s_r(t) \qquad s_d(t) = s_l(t) - s_r(t)$$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4400865 A1
- JP 6224866 A
- US 5253299 A